# EUROPEAN PATENT APPLICATION

(11) **EP 4 691 815 A2**
(43) Date of publication of application: **11.02.2026**
(21) Application number: 25189484.6
(22) Date of filing: 15.07.2025
(51) Int. Cl.: B60H 1/00, B60H 1/22, B60H 1/32

(54) **MULTI-MODE THERMAL CONTROL SYSTEM FOR AN ELECTRICALLY POWERED VEHICLE**

(30) Priority: 16.07.2024 IT 202400016420
(71) Applicant: Stellantis Europe S.p.A., 10135 Torino (TO) (IT)
(72) Inventor: CRIVELLARI, Attilio, 10135 Torino (IT); SHINDELAR, James, 10135 Torino (IT); KUKAWSKI, Jonathan, 10135 Torino (IT); LINDQUIST, Craig, 10135 Torino (IT); BARONE, Mariangela, 10135 Torino (IT); JYAWOOK, Jaime, 10135 Torino (IT); IANNACE, Antonio, 10135 Torino (IT); LOVUOLO, Francesco, 10135 Torino (IT)
(74) Representative: Verdecchia, Valerio

(57) **Abstract**

The thermal control system (10) for electric motor vehicle (M) and battery pack (B) comprises: a battery loop (12) thermally coupled to the battery pack (B), with a first pump (18) and a first fluid-refrigerant heat exchanger (20); a powertrain loop (14) thermally coupled to the electric motor (M), with a second pump (26), a radiator (28); a cabin loop (47), with a third pump (48), an electric heating device (52) and an air-liquid heat exchanger (50) thermally coupled to the cabin; a refrigerant loop (16) wherein a refrigerant is circulated, with a compressor (36), a second fluid-refrigerant heat exchanger (30), an evaporator (38), an air-refrigerant heat exchanger (39), a first, second and third thermal expansion valve (40; 42; 43); a first, a second, a third and a fourth branch (11; 13; 15; 17); a first and a second valve assembly (44; 46).

## Description

The present invention concerns a multi-mode thermal control system for the thermal control of a (at least partially, but preferably entirely) electric powered vehicle, or of a vehicle having a powertrain with an electric motor and a supply system with a battery pack adapted to power the electric motor, and relative thermal control methods making use of such a multi-mode thermal control system.

Multi-mode thermal control systems for the thermal control of a vehicle are known in the art of the field.

For example, US 9,758,011 B2 shows a thermal control system for an electrically powered vehicle, comprising a battery thermal control loop thermally coupled to a battery pack of the vehicle, a powertrain thermal control loop thermally coupled to an electric motor of the vehicle, and a cabin thermal control loop, thermally coupled to the cabin of the vehicle.

Other such thermal control systems are shown, for example, in U.S. Patent Publication US 2021/061067 A1, French Patent Application FR 3,081,123 A1 or International Patent Application WO 2019/166709 A1.

Due to the mode of connection between the three different loops or sub-loops, and the relationships between the refrigerant loop and the general loop in which the heat transfer fluid flows, the methods for use of the thermal control systems according to the prior art are very limited, and always optimized for specific applications, preventing a versatile and variable use depending on different thermal conditions external or internal to the vehicle.

An object of the present invention is to provide a multi-mode thermal control system for a vehicle having an electric motor and a battery pack that powers it that does not suffer from the disadvantages of the prior art, and that may, therefore, be used in a plurality of different modes of use depending on the heating or cooling requirements of the different components of the vehicle.

This and other objects are fully achieved according to the present invention by virtue of a thermal control system as defined in the appended independent claim 1, and of the control methods of such a thermal control system as defined in claims 7 onwards.

Advantageous embodiments of the thermal control system according to the invention are specified in the dependent claims of which the content is to be understood as an integral part of the description which follows.

In summary, the invention is based on the idea of providing a multi-mode thermal control system for a vehicle having a powertrain with an electric motor and a supply system with a battery pack adapted to provide electric power to said electric motor, the thermal control system comprising:
a battery thermal control loop, comprising a first circulation pump and a first fluid-refrigerant heat exchanger, wherein said first circulation pump is adapted to circulate heat transfer fluid within said battery thermal control loop, and wherein said battery thermal control loop is thermally coupled to said battery pack of the vehicle;
a powertrain thermal control loop comprising a second circulation pump, wherein said second circulation pump is adapted to circulate heat transfer fluid within said powertrain thermal control loop, wherein said powertrain thermal control loop is thermally coupled to said electric motor of the vehicle;
a cabin thermal control loop, which comprises a third circulation pump, an electric heating device adapted to provide heat to the heat transfer fluid circulating within the cabin thermal control loop when turned on, and an air-liquid heat exchanger that is thermally coupled to the air of a cabin of the vehicle, wherein said third circulation pump is adapted to circulate heat transfer fluid within said cabin thermal control loop and through said air-liquid heat exchanger;
a refrigerant loop wherein a refrigerant is circulated, and comprising a compressor adapted to circulate said refrigerant within said refrigerant loop, a second first fluid-refrigerant heat exchanger, an evaporator, an air-refrigerant heat exchanger adapted to thermally couple the refrigerant that flows through it and an outer airflow that flows on it, a first thermal expansion valve adapted to couple said evaporator to said refrigerant loop, or to allow a lamination of the refrigerant that flows through said first thermal expansion valve as well as to allow the passage of refrigerant into the evaporator, a second thermal expansion valve adapted to couple said first fluid-refrigerant heat exchanger to said refrigerant loop, or to allow a lamination of the refrigerant that flows through said second thermal expansion valve as well as to allow the passage of refrigerant through the first fluid-refrigerant heat exchanger to allow the thermal coupling between the heat transfer fluid and the refrigerant, or to allow the exchange of heat between the heat transfer fluid and the refrigerant, and a third thermal expansion valve adapted to couple said air-refrigerant heat exchanger to said refrigerant loop, or to allow a lamination of the refrigerant that flows through said third thermal expansion valve as well as to allow the passage of refrigerant through the air-refrigerant heat exchanger to allow the refrigerant to exchange heat with the external air;
the powertrain thermal control loop further comprising a radiator, which is arranged downstream said outer airflow that flows on the air-refrigerant heat exchanger; wherein the powertrain thermal control loop further comprises a by-pass valve configurable in a first mode and in a second mode, wherein when the by-pass valve is configured in its first mode, the by-pass valve allows the passage of the heat transfer fluid circulating within said powertrain thermal control loop in said radiator, and wherein when the by-pass valve is configured in its second mode, the by-pass valve allows the heat transfer fluid circulating within said powertrain thermal control loop to by-pass said radiator by means of a by-pass branch of the powertrain thermal control loop;
a first connecting branch adapted to allow the passage of a flow rate of heat transfer fluid between a first point of the powertrain thermal control loop that is arranged between the radiator and the second circulation pump, or downstream of the radiator and upstream of the second circulation pump, and a second point of the battery thermal control loop that is arranged between the first fluid-refrigerant heat exchanger and the first circulation pump, or downstream of the first fluid-refrigerant heat exchanger and upstream of the first circulation pump;
a second connecting branch, adapted to allow the passage of a flow rate of heat transfer fluid between a third point of the battery thermal control loop that is arranged between the first fluid-refrigerant heat exchanger and the thermal coupling between the battery thermal control loop and the battery pack, or upstream of the first fluid-refrigerant heat exchanger and downstream of the thermal coupling between the battery thermal control loop and the battery pack, and a fourth point of the powertrain thermal control loop that is arranged between the by-pass valve and the thermal coupling between the powertrain thermal control loop and the electric motor of the vehicle, or upstream of the by-pass valve and downstream of the thermal coupling between the powertrain thermal control loop and the electric motor of the vehicle;
a third connecting branch adapted to allow the passage of a flow rate of heat transfer fluid between a fifth point of the cabin thermal control loop arranged between the air-liquid heat exchanger and the third circulation pump, or downstream of the air-liquid heat exchanger and upstream of the third circulation pump, and a sixth point of the powertrain thermal control loop that is arranged between the radiator and the first point, or downstream of the radiator and upstream of the first point; and
a fourth connecting branch, adapted to allow the passage of a flow rate of heat transfer fluid between a seventh point of the powertrain thermal control loop arranged between the sixth point and the radiator, or upstream of the sixth point and downstream of the radiator, and an eighth point of the cabin thermal control loop that is arranged between the fifth point and the third circulation pump, or downstream of the fifth point and upstream of the third circulation pump;
a first valve assembly adapted to control the fluid connection between the battery thermal control loop and the powertrain thermal control loop by adjusting the passage of heat transfer fluid in the second connecting branch, and being configurable to this end in a first mode and in a second mode,
wherein, when the first valve assembly is configured in its first mode, the battery thermal control loop and the powertrain thermal control loop are not in fluid connection with each other, or the heat transfer fluid circulating within the battery thermal control loop does not circulate also within the powertrain thermal control loop, and the heat transfer fluid does not flow through the first connecting branch nor through the second connecting branch, and,
when the first valve assembly is configured in its second mode, the battery thermal control loop and the powertrain thermal control loop are coupled to each other whereby a flow rate of heat transfer fluid flows from the battery thermal control loop to the powertrain thermal control loop, preferably through the second connecting branch, and a flow rate of heat transfer fluid flows from the powertrain thermal control loop to the battery thermal control loop, preferably through the first connecting branch; and
a second valve assembly adapted to control the fluid connection between the cabin thermal control loop and the powertrain thermal control loop by adjusting the passage of heat transfer fluid in the third connecting branch, and being configurable to this end in a first mode and in a second mode,
wherein, when the second valve assembly is configured in its first mode, the cabin thermal control loop and the powertrain thermal control loop are not in fluid connection with each other, or the heat transfer fluid circulating within the cabin thermal control loop does not circulate also within the powertrain thermal control loop, and the heat transfer fluid does not flow through the third connecting branch nor through the fourth connecting branch, and,
when the second valve assembly is configured in its second mode, the cabin thermal control loop and the powertrain thermal control loop are coupled to each other whereby a flow rate of heat transfer fluid flows from the cabin thermal control loop to the powertrain thermal control loop through the third connecting branch and a flow rate of heat transfer fluid flows from the powertrain thermal control loop to the cabin thermal control loop through the fourth connecting branch.

According to a preferred embodiment of the first aspect of the invention, the first valve assembly consists of a three-way valve, and has an inlet, a first outlet that is in direct fluid connection with the second connecting branch, and a second outlet, and said three-way valve is configured in such a way that when the first valve assembly is configured in its first mode the first outlet is closed and the flow rate of heat transfer fluid supplied to the inlet exits entirely from the second outlet and that when the first valve assembly is configured in its second mode the second outlet is closed and the flow rate of heat transfer fluid supplied to the inlet exits entirely from the first outlet. In this case, even more preferably, the battery thermal control loop is configured in such a way that, when the first valve assembly is configured in its first mode, the flow rate of heat transfer fluid supplied to the inlet of the first valve assembly flows entirely towards the first fluid-refrigerant heat exchanger, and when the first valve assembly is configured in its second mode, there is no flow rate of heat transfer fluid supplied to the first fluid-refrigerant heat exchanger.

According to a preferred embodiment of the first aspect of the invention, the second valve assembly consists of a three-way valve, and has an inlet, a first outlet that is in direct fluid connection with the third connecting branch, and a second outlet, and said three-way valve is configured in such a way that when the second valve assembly is configured in its first mode the first outlet is closed and the flow rate of heat transfer fluid supplied to the inlet exits entirely from the second outlet and that when the second valve assembly is configured in its second mode the second outlet is closed and the flow rate of heat transfer fluid supplied to the inlet exits entirely from the first outlet. In this case, even more preferably, the second valve assembly is further configurable in a third mode thereof, whereby when the second valve assembly is configured in its third mode the first outlet is partially open and the second outlet is partially open, whereby the flow rate of heat transfer fluid supplied to the inlet exits in part from the first outlet and in part from the second outlet. Advantageously, the second valve assembly is such that the flow rate that exits from the first outlet and the second outlet is adjustable.

Thanks to a configuration of the thermal control system as in the invention it is possible to achieve the objects of the invention, and, in particular, it is possible to provide a plurality of mode of operations comprising the cooling and/or heating of different components of the vehicle, including the electric motor, the battery pack, and the cabin of the vehicle.

Clearly, also part of the invention is a vehicle comprising a powertrain with at least one electric motor, a supply system with a battery pack adapted to power said powertrain or said electric motor, and a thermal control system according to the first aspect of the invention.

Further aspects of the invention further concerns control methods for controlling the thermal control system of the invention, as described below and, in particular, as claimed in claims 7 onwards. Essentially, such control methods of the thermal control system of the invention constitute uses of the thermal control system of the invention, according to different modalities or modes of use. With the term 'multi-mode', in fact, it is meant that the thermal control system according to the invention can be used according to a plurality of modes of use or modalities of use, or modes of operation comprising the cooling and/or heating of different components of the vehicle, including the electric motor, the battery pack, and the cabin of the vehicle.

According to one embodiment of the control method according to the invention, the method comprises the steps of:
a) providing a thermal control system according to the first aspect of the invention;
b1) turning the second circulation pump on and at the same time keeping the compressor, the first circulation pump and the third circulation pump turned off; and
c1) configuring the by-pass valve in its first mode.

According to one embodiment of the control method according to the invention, the method comprises the steps of:
a) providing a thermal control system according to the first aspect of the invention;
b2) turning the first circulation pump and the compressor on and at the same time keeping the second circulation pump and the third circulation pump turned off; and
d1) configuring the first valve assembly in its first mode.

According to one embodiment of the control method according to the invention, the method comprises the steps of:
a) providing a thermal control system according to the first aspect of the invention;
b3) turning the first circulation pump on and at the same time keeping the compressor, the second circulation pump and the third circulation pump turned off;
c1) configuring the by-pass valve in its first mode; and
d2) configuring the first valve assembly in its second mode.

According to one embodiment of the control method according to the invention, the method comprises the steps of:
a) providing a thermal control system according to the first aspect of the invention;
b4) turning the first circulation pump and the third circulation pump on and at the same time keeping the compressor and the second circulation pump turned off;
c2) configuring the by-pass valve in its second mode;
d2) configuring the first valve assembly in its second mode;
f2) configuring the second valve assembly in its second mode; and
g1) turning the electric heating device on.

According to one embodiment of the control method according to the invention, the method comprises the steps of:
a) providing a thermal control system according to the first aspect of the invention;
b5) turning the first circulation pump and the second circulation pump on and at the same time keeping the compressor and the third circulation pump turned off;
c2) configuring the by-pass valve in its second mode; and
d2) configuring the first valve assembly in its second mode.

According to one embodiment of the control method according to the invention, the method comprises the steps of:
a) providing a thermal control system according to the first aspect of the invention;
b6) turning the compressor on and at the same time keeping the first circulation pump, the second circulation pump and the third circulation pump turned off.

According to one embodiment of the control method according to the invention, the method comprises the steps of:
a) providing a thermal control system according to the first aspect of the invention;
b7) turning the compressor, the first circulation pump and the third circulation pump on, and at the same time keeping the second circulation pump turned off;
c1) configuring the by-pass valve in its first mode; and
f2) configuring the second valve assembly in its second mode.

According to one embodiment of the control method according to the invention, the method comprises the steps of:
a) providing a thermal control system according to the first aspect of the invention;
b8) turning the third circulation pump on, and at the same time keeping the compressor, the first circulation pump and the second circulation pump turned off;
f1) configuring the second valve assembly in its first mode; and
g1) turning the electric heating device on.

According to one embodiment of the control method according to the invention, the method comprises the steps of:
a) providing a thermal control system according to the first aspect of the invention, wherein the second valve assembly consists of a three-way valve, having an inlet, a first outlet that is in direct fluid connection with the third connecting branch, and a second outlet, said three-way valve being configured in such a way that when the second valve assembly is configured in its first mode the first outlet is closed and the flow rate of heat transfer fluid supplied to the inlet exits entirely from the second outlet and that when the second valve assembly is configured in its second mode the second outlet is closed and the flow rate of heat transfer fluid supplied to the inlet exits entirely from the first outlet; and wherein the second valve assembly is further configurable in a third mode thereof, wherein when the second valve assembly is configured in its third mode the first outlet is partially open and the second outlet is partially open, whereby the flow rate of heat transfer fluid supplied to the inlet exits in part from the first outlet and in part from the second outlet;
b4) turning the first circulation pump and the third circulation pump on and at the same time keeping the compressor and the second circulation pump turned off;
c2) configuring the by-pass valve in its second mode; and
d3) configuring the second valve assembly in its third mode.

According to one embodiment of the control method according to the invention, the method comprises the steps of:
a) providing a thermal control system according to the first aspect of the invention;
b7) turning the compressor, the first circulation pump and the third circulation pump on, and at the same time keeping the second circulation pump turned off;
c2) configuring the by-pass valve in its second mode; and
f2) configuring the second valve assembly in its second mode.

According to one embodiment of the control method according to the invention, the method comprises the steps of:
a) providing a thermal control system according to the first aspect of the invention;
b9) turning the compressor and the third circulation pump on, and at the same time keeping the first circulation pump and the second circulation pump turned off;
f1) configuring the second valve assembly in its first mode.

According to one embodiment of the control method according to the invention, the method comprises the steps of:
a) providing a thermal control system according to the first aspect of the invention;
b10) turning the second circulation pump, the third circulation pump and the compressor on, and at the same time keeping the first circulation pump turned off;
d2) configuring the first valve assembly in its second mode; and
f1) configuring the second valve assembly in its first mode.

Further features and advantages of the present invention will become clearer from the following detailed description, which is provided by way of non-limiting example with reference to the accompanying drawings, in which:
figure 1 is a schematic view of the thermal control system according to an embodiment of the invention;
figure 2 is a schematic view of a first mode of operation of the thermal control system of figure 1, said "electric motor cooling mode", or of a method for cooling an electric motor making use of the thermal control system of figure 1;
figure 3 is a schematic view of a second mode of operation of the thermal control system of figure 1, said "battery pack cooling mode", or of a method for cooling the battery pack making use of the thermal control system of figure 1;
figure 4 is a schematic view of a third mode of operation of the thermal control system of figure 1, said "battery pack passive cooling mode", or of a method for passive cooling of the battery pack making use of the thermal control system of figure 1;
figure 5 is a schematic view of a fourth mode of operation of the thermal control system of figure 1, said "battery pack heating mode", or a method for heating the battery pack making use of the thermal control system of figure 1;
figure 6 is a schematic view of a fifth mode of operation of the thermal control system of figure 1, said "battery pack passive heating mode", or of a method for battery pack passive heating making use of the thermal control system of figure 1;
figure 7 is a schematic view of a sixth mode of operation of the thermal control system of figure 1, said "cabin cooling mode", or of a method for cooling the cabin making use of the thermal control system of figure 1;
figure 8 is a schematic view of a seventh mode of operation of the thermal control system of figure 1, said "enhanced cabin cooling mode", or of an enhanced method for cooling the cabin making use of the thermal control system of figure 1;
figure 9 is a schematic view of an eighth mode of operation of the thermal control system of figure 1, said "cabin heating mode", or of a method for heating the cabin making use of the thermal control system of figure 1;
figure 10 is a schematic view of a ninth mode of operation of the thermal control system of figure 1, said "cabin passive heating mode", or of a method for passive heating of the cabin making use of the thermal control system of figure 1;
figure 11 is a schematic view of a tenth mode of operation of the thermal control system of figure 1, said "cabin heating mode by means of heat pump and electric motor", or of a method for heating the cabin by means of heat pump and electric motor making use of the thermal control system of figure 1;
figure 12 is a schematic view of an eleventh mode of operation of the thermal control system of figure 1, said "cabin heating mode by means of ambient heat pump", or a method for heating the cabin by means of ambient heat pump making use of the thermal control system of figure 1; and
figure 13 is a schematic view of a twelfth mode of operation of the thermal control system of figure 1, said "cabin heating mode by means of heat pump of the powertrain", or of a method for heating the cabin by means of heat pump of the powertrain making use of the thermal control system of figure 1.

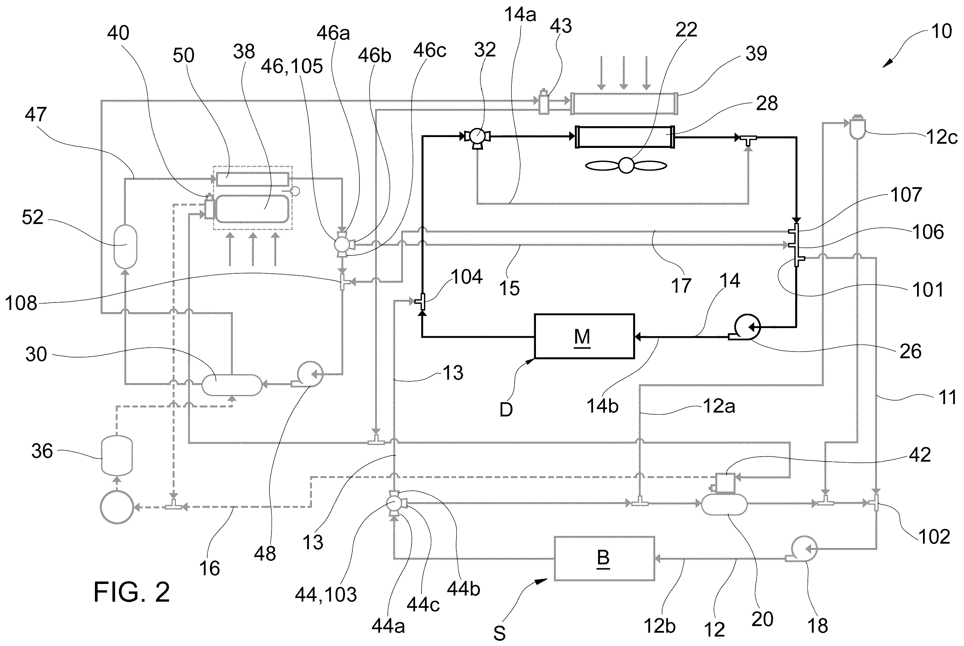

In figures 2 to 13, the loop branches or conduits in which heat transfer fluid or refrigerant fluid circulates are highlighted. In addition, in the refrigerant loop branches, the dashed line indicates a conduit in which refrigerant flows in gaseous form, while the solid line indicates a conduit in which refrigerant flows in liquid form.

With reference to the figures, the thermal control system according to the invention is generally indicated with 10. The thermal control system 10 is a multi-mode system, that is, it is a system that can be configured in a plurality of different modes of use, depending on the type of use required (cooling, heating, or neither) with respect to a plurality of components (electric motor, batteries, cabin, and others) that are thermally coupled to the system and that require thermal control.

The thermal control system 10 is used for the thermal control of a vehicle, in particular of a vehicle having a powertrain D, with an electric motor M, and a supply system S, with a battery pack B, adapted to power said electric motor M. Preferably, the vehicle is a fully electrically powered vehicle. As is evident, the powertrain D may also comprise a greater number of electric motors M, and the battery pack B may comprise one or more batteries or cells adapted to power said one or more electric motors M, but the description and the appended claims will always refer to a single electric motor M and to a single battery pack B only for simplicity and brevity and in a purely exemplary and non-limiting manner.

The thermal control system 10 comprises a battery thermal control loop 12, a powertrain thermal control loop 14, and a cabin thermal control loop 47, within each of which a same thermal exchange fluid circulates, and a refrigerant loop 16, within which a refrigerant fluid circulates.

The thermal control system 10 further comprises a first, a second, a third, and a fourth connecting branch 11, 13, 15, 17, which are arranged so as to allow fluid connection between the battery thermal control loop 12, the powertrain thermal control loop 14 and the cabin thermal control loop 47 as described in more detail below. Finally, the thermal control system 10 comprises a first valve assembly 44 and a second valve assembly 46, so as to be able to control and adjust the fluid connection between the battery thermal control loop 12, the powertrain thermal control loop 14 and the cabin thermal control loop 47 as described in more detail below.

The heat transfer fluid may be composed of a mixture of water and glycol, in varying proportions depending on the application. The refrigerant fluid may, by way of non-limiting example, comprise refrigerant fluid R-1234y (according to the word standard of the American Society of Heating, Refrigerating and Air-Conditioning Engineers), or even other types of refrigerant fluid (such as carbon dioxide, refrigerant fluid R-290 and/or refrigerant fluid R-134a according to the same standard just mentioned). According to a preferable embodiment of the invention, the heat transfer fluid and the refrigerant fluid are different from each other, and according to an even more preferred embodiment of the invention, the heat transfer fluid is composed of a mixture of water and glycol while the refrigerant fluid comprises refrigerant fluid R-1234y and/or refrigerant fluid R-290 and/or refrigerant fluid R-134a according to the aforementioned standard.

The battery thermal control loop 12 is thermally coupled to the battery pack B of the vehicle, that is, the arrangement and the relative configuration of the battery pack B and of the battery thermal control loop 12 are such as to allow the exchange of thermal energy between the battery thermal control loop 12, that is, between the flow rate of heat transfer fluid circulating therein or in a coupling branch 12b thereof, and the battery pack B in both directions, to allow controlled heating or cooling of the battery pack B.

The battery thermal control loop 12 comprises a first circulation pump 18 and a first fluid-refrigerant heat exchanger 20. The first circulation pump 18 is adapted to circulate heat transfer fluid within the battery thermal control loop 12 in a manner known per se. The first fluid-refrigerant heat exchanger 20 is adapted to allow heat exchange between the battery thermal control loop 12 and the refrigerant loop 16, or between the flow rate of heat transfer fluid and the refrigerant flow rate that are supplied to the first fluid-refrigerant heat exchanger 20 from, respectively, the battery thermal control loop 12 and the refrigerant loop 16. Advantageously, a thermal expansion valve - the second thermal expansion valve 42, described below - is arranged so as to control the flow of refrigerant in the first fluid-refrigerant heat exchanger 20, and, therefore, the thermal coupling between the battery thermal control loop 12 and the refrigerant loop 16.

In an advantageous embodiment, a tapping branch 12a can branch from the battery thermal control loop 12 leading to an expansion vessel 12c for topping up the heat transfer fluid in the battery thermal control loop 12.

The powertrain thermal control loop 14 is thermally coupled to the powertrain D, and in particular to the electric motor M of the vehicle, that is, the arrangement and the relative configuration of the electric motor M and of the powertrain thermal control loop 14 are such as to allow the exchange of thermal energy between the powertrain thermal control loop 14, that is, between the flow rate of heat transfer fluid circulating therein or in a coupling branch 14b thereof, and the electric motor M in both directions, to allow controlled heating or cooling of the electric motor M. In some embodiments of the invention, not shown but known per se, the powertrain thermal control loop 14 is thermally coupled to more than one electric motor M of the powertrain D, for example to a pair of electric motors M, by means of two coupling branches 14b arranged in parallel to each other. Clearly, the powertrain thermal control loop 14 can also be thermally coupled to further components of the powertrain D requiring thermal control, in a manner known per se.

The powertrain thermal control loop 14 further comprises a second circulation pump 26. The second circulation pump 26 is adapted to circulate heat transfer fluid within the powertrain thermal control loop 14, in a manner known per se. The powertrain thermal control loop 14 comprises a radiator 28, which is arranged so as to be thermally coupled to an air-refrigerant heat exchanger 39 of the refrigerant loop 16 (which will be described below), and in particular so as to be arranged downstream of an airflow that flows on it.

The radiator 28 is arranged on a by-passable branch of the powertrain thermal control loop 14, referred to as the by-pass branch 14a. To control and adjust the flow rate of heat transfer fluid flowing in the by-pass branch 14a, the powertrain thermal control loop 14 comprises a by-pass valve 32, configurable in a first mode and in a second mode. When this by-pass valve 32 is configured in the first mode, it allows the passage of the heat transfer fluid circulating within the powertrain thermal control loop 14 in or through the radiator 28. On the contrary, when the by-pass valve 32 is configured in the second mode, this allows the heat transfer fluid circulating within the powertrain thermal control loop 14 to by-pass said radiator 28, or diverts the flow of the heat transfer fluid circulating in the powertrain thermal control loop 14 on the by-pass branch 14a which bypasses the radiator 28, as clear from the figures. In a manner known per se, this by-pass valve 32 can be provided as a three-way valve, or as a selection valve that allows to control on which of the two outlet branches the flow of incoming heat transfer fluid is directed. In one embodiment, the by-pass valve 32 is made such that it can simultaneously send a flow rate on the by-pass branch 14a and a flow rate to the radiator 28, for example by being able to control such respective flow rates.

In a manner known per se, a fan 22 may be associated with the radiator 28.

According to the invention, as said above, the thermal control system 10 further comprises a cabin thermal control loop 47. The cabin thermal control loop 47 allows a control of the temperature of a cabin of the vehicle, that is, the cabin thermal control loop 47, or the flow rate of heat transfer fluid flowing therein, is thermally coupled to the cabin of the vehicle, or to an airflow that is directed or fed to said cabin.

The cabin thermal control loop 47 essentially comprises a third circulation pump 48, an electric heating device 52 and an air-liquid heat exchanger 50.

The third circulation pump 48 is adapted to circulate heat transfer fluid within the cabin thermal control loop 47, and, therefore, also through the air-liquid heat exchanger 50 in a manner known per se.

The thermal coupling between the cabin thermal control loop 47 and the cabin is realized through the air-liquid heat exchanger 50, which is adapted to allow the thermal exchange between the flow rate of heat transfer fluid flowing through it and air of the cabin of the vehicle.

The electric heating device 52 is adapted to provide heat to the heat transfer fluid circulating in the cabin thermal control loop 47, when turned on, in a manner known per se.

As shown by the figures, preferably the evaporator 38 and the air-liquid heat exchanger 50 are operatively associated with each other so that an airflow of the cabin flows in succession first through the evaporator 38 and then through the air-liquid heat exchanger 50.

As anticipated, the thermal control system 10 comprises a first, a second, a third and a fourth connecting branch 11, 13, 15, and 17 for the fluid connection between the battery thermal control loop 12, the powertrain thermal control loop 14 and the cabin thermal control loop 47.

In particular, the first connecting branch 11 allows the passage of a flow rate of heat transfer fluid between the powertrain thermal control loop 14 and the battery thermal control loop 12, extending between a first point 101 of the powertrain thermal control loop 14 that is arranged between the radiator 28 and the second circulation pump 26 and a second point 102 of the battery thermal control loop 12 that is arranged between the first fluid-refrigerant heat exchanger 20 and the first circulation pump 18. Advantageously, the first point 101 is arranged downstream of the radiator 28 and upstream of the second circulation pump 26 and the second point 102 is arranged downstream of the first fluid-refrigerant heat exchanger 20 and upstream of the first circulation pump 18, according to the flow direction of the flow rate of heat transfer fluid flowing within the respective loops.

Similarly, the second connecting branch 13 allows the passage of a flow rate of heat transfer fluid between the powertrain thermal control loop 14 and the battery thermal control loop 12, extending between a third point 103 of the battery thermal control loop 12 that is arranged between the first fluid-refrigerant heat exchanger 20 and the thermal coupling between the battery thermal control loop 12 and the battery pack B and a fourth point 104 of the powertrain thermal control loop 14 that is arranged between the by-pass valve 32 and the thermal coupling between the powertrain thermal control loop 14 and the electric motor M of the vehicle. Advantageously, the third point 103 is arranged upstream of the first fluid-refrigerant heat exchanger 20 and downstream of the thermal coupling between the battery thermal control loop 12 and the battery pack B and the fourth point 104 is arranged upstream of the by-pass valve 32 and downstream of the thermal coupling between the powertrain thermal control loop 14 and the electric motor M of the vehicle, according to the flow direction of the flow rate of the heat transfer fluid flowing within the respective loops.

Similarly, the third connecting branch 15 allows the passage of a flow rate of heat transfer fluid between the powertrain thermal control loop 14 and the cabin thermal control loop 47, extending between a fifth point 105 of the cabin thermal control loop 47 that is arranged between the air-liquid heat exchanger 50 and the third circulation pump 48 and a sixth point 106 of the powertrain thermal control loop 14 that is arranged between the radiator 28 and the first point 101. Advantageously, the fifth point 105 is arranged downstream of the air-liquid heat exchanger 50 and upstream of the third circulation pump 48 and the sixth point 106 is arranged downstream of the radiator 28 and upstream of the first point 101, according to the flow direction of the flow rate of heat transfer fluid flowing within the respective loops.

Finally, similarly, the fourth connecting branch 17 allows the passage of a flow rate of heat transfer fluid between the powertrain thermal control loop 14 and the cabin thermal control loop 47, extending between a seventh point 107 of the powertrain thermal control loop 14 that is arranged between the sixth point 106 and the radiator 28 and an eighth point 107 of the cabin thermal control loop 47 that is arranged between the fifth point 105 and the third circulation pump 48. Advantageously, the seventh point 107 is arranged downstream of the radiator 28 and upstream of the sixth point 106 and the eighth point 108 is arranged downstream of the fifth point 105 and upstream of the third circulation pump 48, according to the flow direction of the flow rate of heat transfer fluid flowing within the respective loops. As is clear from the figures, in the embodiment of the invention shown, the sixth point 106 is arranged between the first point 101 and the seventh point 107. As is clear from the figures, and in particular from the comparison between them, in the embodiment of the invention shown, the flow of heat transfer fluid within the first connecting branch 11, within the second connecting branch 13, the third connecting branch 15 and the fourth connecting branch 17 can flow in either one direction or the other depending on the mode of operation of the thermal control system 10.

The adjustment of the coupling between the powertrain thermal control loop 14 and the battery thermal control loop 12 can be realized in different ways. To this end, as anticipated, the thermal control system 10 comprises a first valve assembly 44, arranged so as to be able to control the fluid connection between the battery thermal control loop 12 and the powertrain thermal control loop 14, or so as to be able to control or adjust the passage of all or part of the flow rate of heat transfer fluid circulating in the second connecting branch 13. Indeed, the first valve assembly 44 can be configured in a first mode and in a second mode, depending on the type of functional relationship to be established between the battery thermal control loop 12 and the powertrain thermal control loop 14. When the first valve assembly 44 is configured in its first mode, the battery thermal control loop 12 and the powertrain thermal control loop 14 are not in fluid connection with each other, or the heat transfer fluid that can circulate in the powertrain thermal control loop 14 cannot reach also the battery thermal control loop 12 and vice versa, or there is no sharing of flow rate of heat transfer fluid between the battery thermal control loop 12 and the powertrain thermal control loop 14. As a result, the heat transfer fluid does not flow either through the first connecting branch 11 or through the second connecting branch 13. When, instead, the first valve assembly 44 is configured in its second mode, the battery thermal control loop 12 and the powertrain thermal control loop 14 are coupled to each other, whereby a flow rate of heat transfer fluid circulating within the battery thermal control loop 12 circulates also in the powertrain thermal control loop 14. Accordingly, a flow rate of heat transfer fluid flows from the battery thermal control loop 12 to the powertrain thermal control loop 14 by means of the second connecting branch 13 - or alternatively by means of the first connecting branch 11 - and a flow rate of heat transfer fluid flows from the powertrain thermal control loop 14 to the battery thermal control loop 12 by means of the first connecting branch 11 - or alternatively by means of the second connecting branch 12.

In the embodiment shown in the figures, the first valve assembly 44 consists of a three-way valve 44, which thus has three inlet/outlet channels. In particular, it has an inlet 44a, a first outlet 44b and a second outlet 44c. The first outlet 44b is in direct fluid connection with the second connecting branch 13, while the second outlet 44c is configured so as to supply the flow rate of heat transfer fluid that exits entirely therefrom to the first fluid-refrigerant heat exchanger 20. The first valve assembly 44 is preferably in such a way that when configured in the first mode, the first outlet 44b is closed and the flow rate of heat transfer fluid supplied to the inlet 44a exits entirely from the second outlet 44c, while when configured in its second mode the second outlet 44c is closed and the flow rate of heat transfer fluid supplied to the inlet 44a exits entirely from the first outlet 44b. Nothing prevents the first valve assembly 44 from being made in such a way as to allow a partialized control of its outlets, for example in such a way that the flow rate of heat transfer fluid supplied to the inlet 44a exits in part from the second outlet 44c and in part from the first outlet 44b.

The adjustment of the coupling between the powertrain thermal control loop 14 and the cabin thermal control loop 47 can be carried out in different ways. To this end, as mentioned, the thermal control system 10 comprises a second valve assembly 46, arranged so as to be able to control the fluid connection between the cabin thermal control loop 47 and the powertrain thermal control loop 14, or so as to be able to control or adjust the passage of all or part of the flow rate of heat transfer fluid circulating in the third connecting branch 15. Indee, the second valve assembly 46 can be configured in a first mode thereof and in a second mode thereof, depending on the type of functional relationship to be established between the cabin thermal control loop 47 and the powertrain thermal control loop 14. When the second valve assembly 46 is configured in its first mode, the cabin thermal control loop 47 and the powertrain thermal control loop 14 are not in fluid connection with each other, or the heat transfer fluid that can circulate in the powertrain thermal control loop 14 cannot reach also the cabin thermal control loop 47 and vice versa, or there is no sharing of flow rate of heat transfer fluid between the cabin thermal control loop 47 and the powertrain thermal control loop 14. Accordingly, the heat transfer fluid does not flow either through the third connecting branch 15 or through the fourth connecting branch 17. When, instead, the second valve assembly 46 is configured in its second mode, the cabin thermal control loop 47 and the powertrain thermal control loop 14 are coupled to each other, whereby a flow rate of heat transfer fluid circulating within the cabin thermal control loop 47 circulates also in the powertrain thermal control loop 14. Accordingly, a flow rate of heat transfer fluid flows from the cabin thermal control loop 47 to the powertrain thermal control loop 14 by means of the third connecting branch 15, and a flow rate of heat transfer fluid flows from the powertrain thermal control loop 14 to the cabin thermal control loop 47 by means of the fourth connecting branch 17.

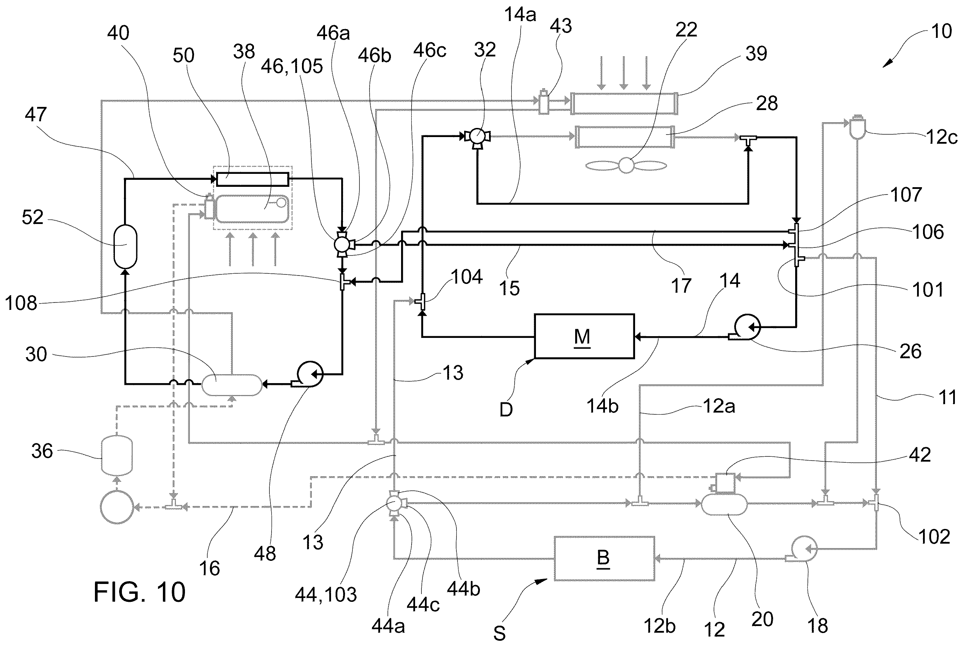

In the embodiment shown in the figures, the second valve assembly 46 consists of a three-way valve 46, which thus has three inlet/outlet channels. In particular, it has an inlet 46a, a first outlet 46b and a second outlet 46c. The first outlet 46b is in direct fluid connection with the third connecting branch 15, while the second outlet 46c is configured so as to supply the flow rate of heat transfer fluid that exits entirely therefrom to the third circulation pump 48. The second valve assembly 46 is preferably such that when configured in the first mode, the first outlet 46b is closed and the flow rate of heat transfer fluid supplied to the inlet 46a exits entirely from the second outlet 46c, while when configured in its second mode the second outlet 46c is closed and the flow rate of heat transfer fluid supplied to the inlet 46a exits entirely from the first outlet 46b. Nothing prevents the second valve assembly 46 from being made in such a way as to allow a partialized control of its outlets, for example in such a way that the flow rate of heat transfer fluid supplied to the inlet 46a exits in part from the second outlet 46c and in part from the first outlet 46b, as shown for example in figure 10.

The refrigerant loop 16 essentially comprises a second air-refrigerant heat exchanger 30 (exposed to an outer airflow depicted in the figures with three small arrows), a compressor 36, an evaporator 38 (exposed to an airflow of the cabin depicted in the figures with three small arrows), a first thermal expansion valve 40, a second thermal expansion valve 42 and a third thermal expansion valve 43.

The compressor 36 substantially plays the role of a pump and is in fact arranged to circulate, when turned on, the refrigerant inside the refrigerant loop.

The second fluid-refrigerant heat exchanger 30 is adapted to allow heat exchange between the cabin thermal control loop 47 and the refrigerant loop 16, that is, between the flow rate of heat transfer fluid and the refrigerant flow rate that are supplied to the second fluid-refrigerant heat exchanger 30 from, respectively, the cabin thermal control loop 47 and the refrigerant loop 16

The evaporator 38 is arranged to be thermally coupled with the passenger cabin of the vehicle.

The air-refrigerant heat exchanger 39 is arranged so as to thermally couple the flow rate of refrigerant that passes through it with an outer airflow that flows on it, or it is configured to allow the thermal exchange between said flow rate of refrigerant and said outer airflow. As shown in the figures, the thermal control system 10 is configured in such a way that the flow of external air then flows on the radiator 28 in succession, advantageously assisted by the fan 22.

The first thermal expansion valve 40 is adapted to couple the evaporator 38 to the refrigerant loop 16, or to adjust the inflow of refrigerant from the refrigerant loop 16 to the evaporator 38 by lamination.

Similarly, the second thermal expansion valve 42, on the other hand, is adapted to couple the first fluid-refrigerant heat exchanger 20 of the battery thermal control loop 12 to the refrigerant loop 16, so as to allow the thermal exchange between the refrigerant and the heat transfer fluid circulating in the battery thermal control loop 12, adjusting the flow of refrigerant from the refrigerant loop 16 to the first fluid-refrigerant heat exchanger 20 by lamination.

Similarly, the third thermal expansion valve 43 is adapted to couple the air-refrigerant heat exchanger 39 with the refrigerant loop, adjusting the inflow of refrigerant from the refrigerant loop 16 to the air-refrigerant heat exchanger 39 by lamination.

At least one of the first thermal expansion valve 40, the second thermal expansion valve 42 and the third thermal expansion valve 43 is preferably arranged or configured to also function as a by-pass valve. In the most preferred embodiment of the invention, the second thermal expansion valve 42 is configured to function, when so commanded, also as a by-pass valve, and therefore alternatively, allow - in different proportions depending on the lamination that the second thermal expansion valve 42 carries out - the inflow of refrigerant to the first fluid-refrigerant heat exchanger 20 or allow the refrigerant to circulate in the refrigerant loop 16 by-passing the first fluid-refrigerant heat exchanger 20.

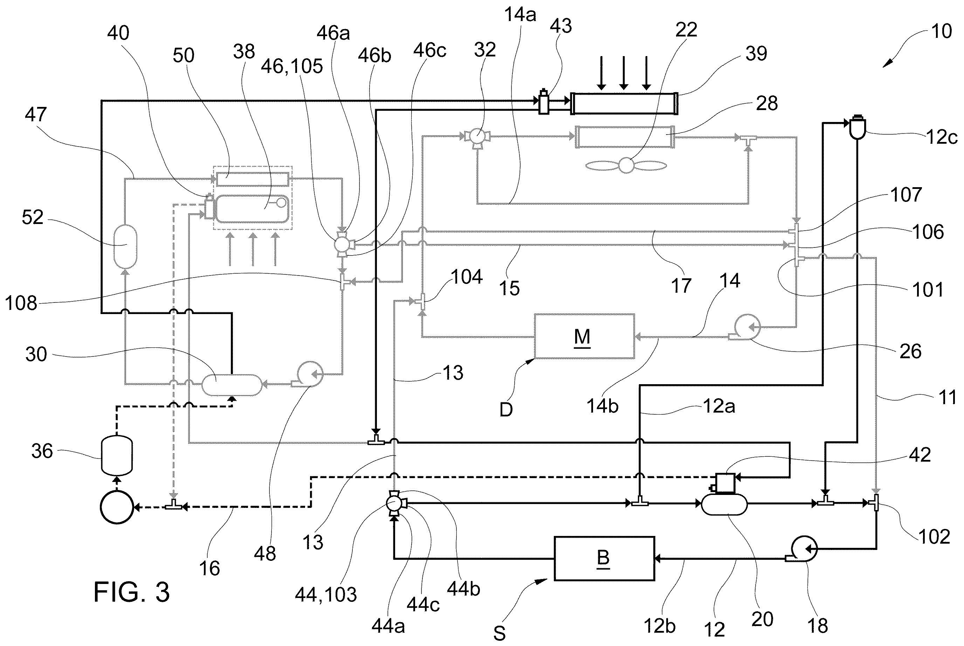

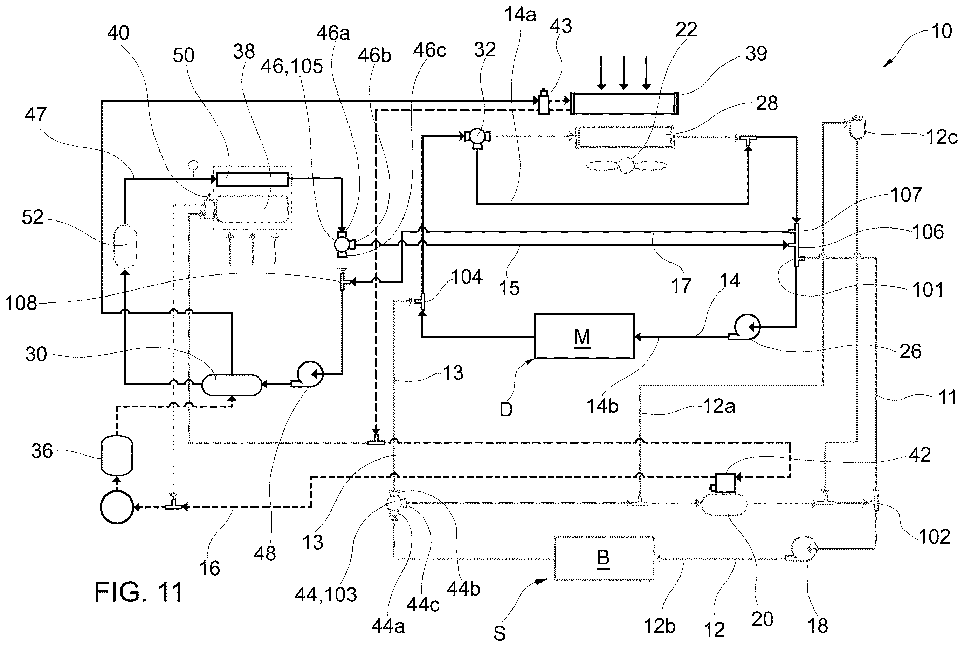

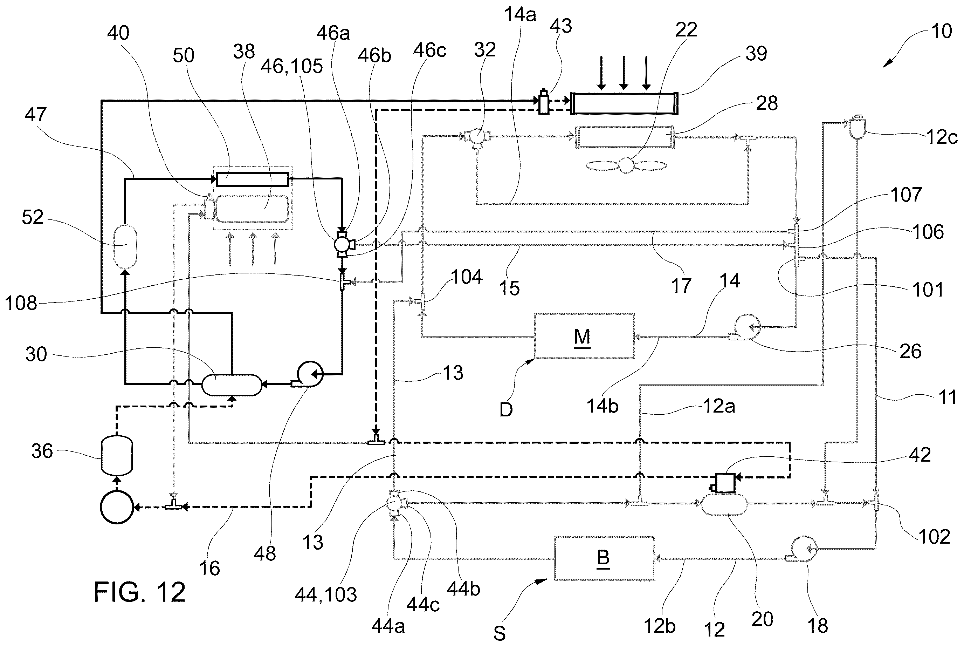

In some modes of operation of the thermal control system 10 according to the invention, when the compressor 36 is turned on, the refrigerant fluid is compressed by it and subsequently passes into the second fluid-refrigerant heat exchanger 30. In a manner known per se, a first phase change takes place inside the second fluid-refrigerant heat exchanger 30, whereby the refrigerant fluid, as a result of the heat exchange with the flow rate of heat transfer fluid that is supplied to the second fluid-refrigerant heat exchanger 30, passes from the gaseous state to the liquid state. The refrigerant fluid, now liquid, is then subcooled in this way, and is supplied, by means of the third thermal expansion valve 43, to the air-refrigerant heat exchanger 39. The latter component, depending on the control mode of the thermal control system 10 or the mode of operation, can function as a condenser (as, for example, shown in figures 3, 7, 8 and 13) or as an evaporator (as, for example, shown in figures 11 and 12). Subsequently, the refrigerant fluid may be supplied, by means of the first thermal expansion valve 40 and the second thermal expansion valve 42, respectively, to one or both of the evaporator 38 and the first fluid-refrigerant heat exchanger 20, before returning to the compressor 36 and thereby completing the cycle of the refrigerant loop 16.

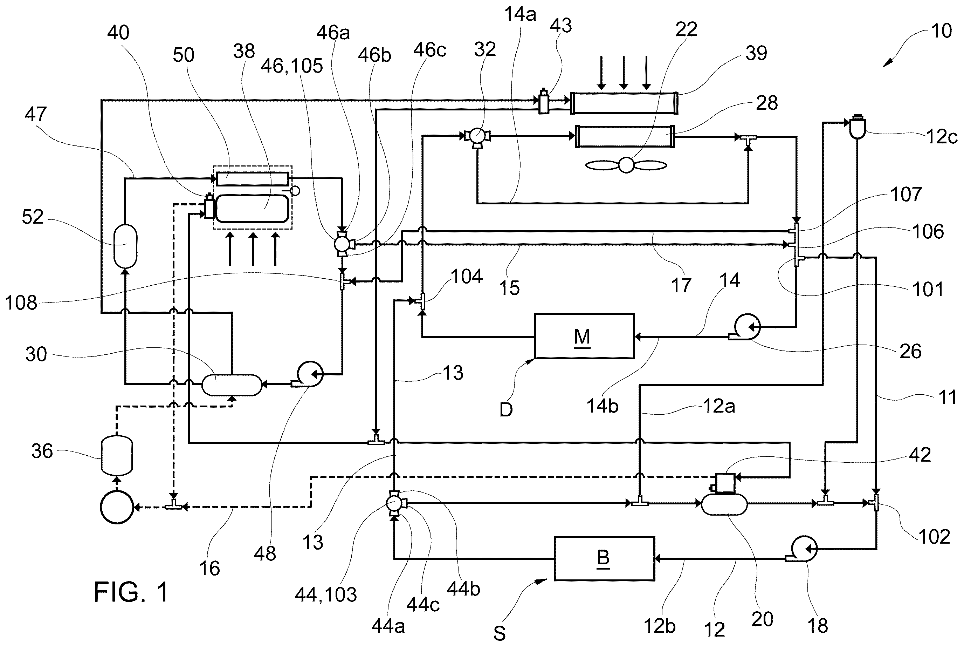

The thermal control system 10 according to the invention can function in different ways, or it can be controlled according to different control methods, depending on the type of thermal control (heating, cooling, or neither) that is required for the different components of the vehicle that are thermally coupled to the thermal control system 10 (cabin, battery pack B, powertrain D, etc.). Some of these control methods, or mode of operations, will be described with reference to the thermal control system 10 according to the embodiment shown in figure 1.

A first mode of operation, called "electric motor cooling mode", or electric motor cooling mode making use of the thermal control system 10, is shown in figure 2. In this mode of operation, the second circulation pump 26 is turned on, with the by-pass valve 32 configured in its first mode, so as to allow the passage of the heat transfer fluid circulating within the powertrain thermal control loop 14 in the radiator 28. At the same time, the compressor 36, and the first circulation pump 18 and the third circulation pump 48 are kept turned off. As is clear from the figure, in this mode of operation, there is substantially a flow of heat transfer fluid only within the powertrain thermal control loop 14, while the refrigerant loop 16 is not active. In this way, the heat transfer fluid withdraws heat from the thermal coupling with the electric motor M and releases it to the external environment by means of the radiator 28. This mode of operation is particularly useful when it is necessary to reduce the temperature of the electric motor M, but this temperature is not excessively high and it is sufficient to use the heat dispersion provided by the radiator 28. For example, this mode of operation can be used when the temperature of the environment is medium, for example it is comprised between about 15°C and 30°C, and when the demand for electrical power by the electric motor M is low or medium; a typical use is, therefore, that of urban cycles, of the type of the WLTP (World harmonized Light-duty vehicles Test Procedure) cycle currently in force.

A second mode of operation, called "battery pack cooling mode", or battery pack cooling mode making use of the thermal control system 10, is shown in figure 3. In this mode of operation, the first circulation pump 18 and the compressor 36 are turned on, with the first valve assembly 44 configured in its first mode. At the same time, the second circulation pump 26 and the third circulation pump 48 are kept turned off or deactivated. As is clear from the figure, in this mode of operation, there is substantially a flow of heat transfer fluid only within the battery thermal control loop 12, while the refrigerant loop 16 is partially active and a flow of refrigerant fluid is defined that runs a cycle from the compressor 36 to the air-refrigerant heat exchanger 39, then up to the first fluid-refrigerant heat exchanger 20 and then it returns to the compressor 36. In this way, the heat transfer fluid withdraws heat from the thermal coupling with the battery pack B and transfers it to the refrigerant fluid by means of the first fluid-refrigerant heat exchanger 20, which will disperse this heat by condensation inside the air-refrigerant heat exchanger 39. This mode of operation is particularly useful when it is necessary to reduce the temperature of the battery pack B, but this temperature is not excessively high and it is sufficient to use the heat dispersion provided by the air-refrigerant heat exchanger 39. For example, this mode of operation can be used when the temperature of the environment is medium, for example it is comprised between about 15°C and 30°C and the heat generation by the battery pack B is low; a typical use is, therefore, that of urban cycles, of the type of the WLTP cycle (World harmonized Light-duty vehicles Test Procedure) currently in force, or when the vehicle is stationary and the external environment is at medium or high temperature (for example from about 25°C onwards).

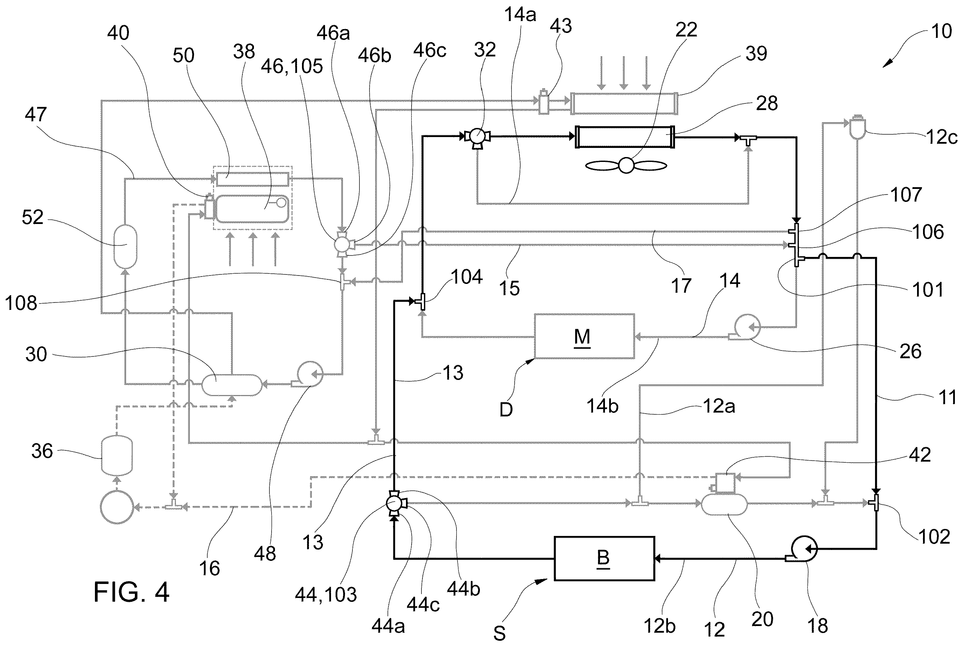

A third mode of operation, called "battery pack passive cooling mode", or battery pack passive cooling mode making use of the thermal control system 10, is shown in figure 4. In this mode of operation, the first circulation pump 18 is turned on, with the by-pass valve 32 configured in its first mode, so as to allow the passage of the heat transfer fluid circulating within the powertrain thermal control loop 14 in the radiator 28. At the same time, the compressor 36, and the first circulation pump 18 and the third circulation pump 48 are kept turned off. At the same time, the first valve assembly 44 is configured in its second mode. As is clear from the figure, in this mode of operation, there is substantially a flow of heat transfer fluid partially within the powertrain thermal control loop 14 and partially within the battery control loop 12, while the refrigerant loop 16 is not active. In this way, the heat transfer fluid withdraws heat from the thermal coupling with the battery pack B and releases it to the external environment by means of the radiator 28. This mode of operation is particularly useful when it is necessary to reduce the temperature of the battery pack B, but this temperature is not high or low and it is sufficient to use the heat dispersion provided by the radiator 28, and, unlike the second mode of operation, without the need for the heat lost by the phase change of the refrigerant. For example, this mode of operation can be used when the temperature of the environment is medium or low, for example it is comprised between about 5°C and 30°C and the heat generation by the battery pack B is low; a typical use is, therefore, when the vehicle is stationary or charging in a cold environment.

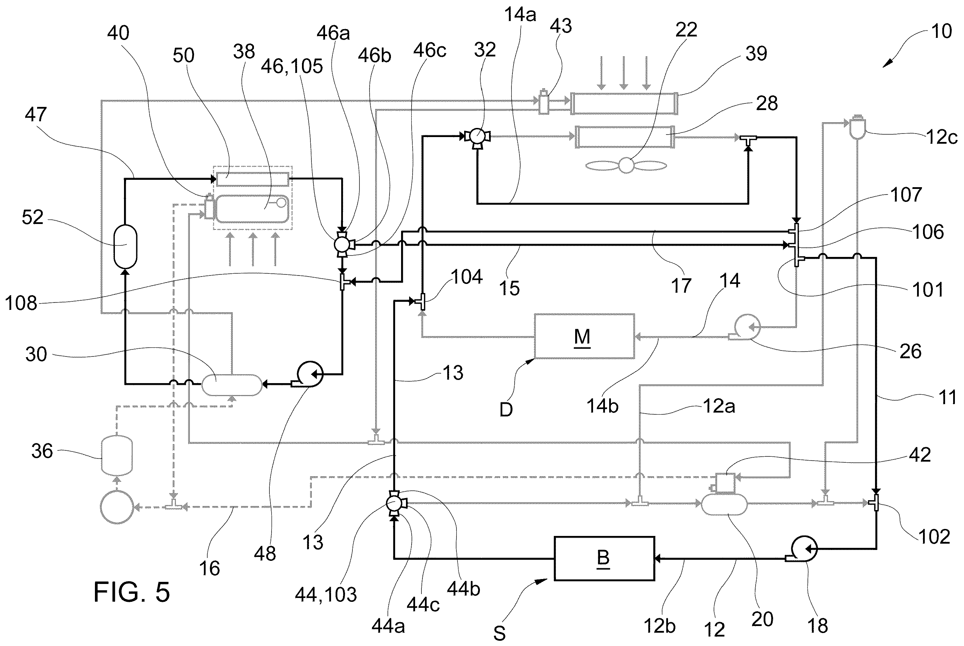

A fourth mode of operation, called "battery pack heating mode", or battery pack heating mode making use of the thermal control system 10, is shown in figure 5. In this mode of operation, the first circulation pump 18 and the third circulation pump 48 are turned on, with the by-pass valve 32 configured in its second mode, so as to avoid or by-pass the passage of the heat transfer fluid circulating within the powertrain thermal control loop 14 in the radiator 28. At the same time, the compressor 36, and the first circulation pump 18 are kept turned off. At the same time, the first valve assembly 44 is configured in its second mode, so as to put the battery thermal control loop 12 in fluid communication with the powertrain thermal control loop 14 through the first connecting branch 11 and the second connecting branch 13, while the second valve assembly 46 is configured in its second mode so as to put the powertrain thermal control loop 14 in fluid communication with the cabin thermal control loop 47 through the third connecting branch 15 and the fourth connecting branch 17. Finally, in this mode, the electric heating device 52 is turned on. As is clear from the figure, in this mode of operation, there is substantially a flow of heat transfer fluid which is heated by the electric heating device 52 and which releases its heat to the battery pack B. This mode of operation is particularly useful - regardless of the temperature of the external environment - when it is necessary to increase the temperature of the battery pack B, or to heat the battery pack B, but the electric motor M is not hot or is not able to provide sufficient heat.

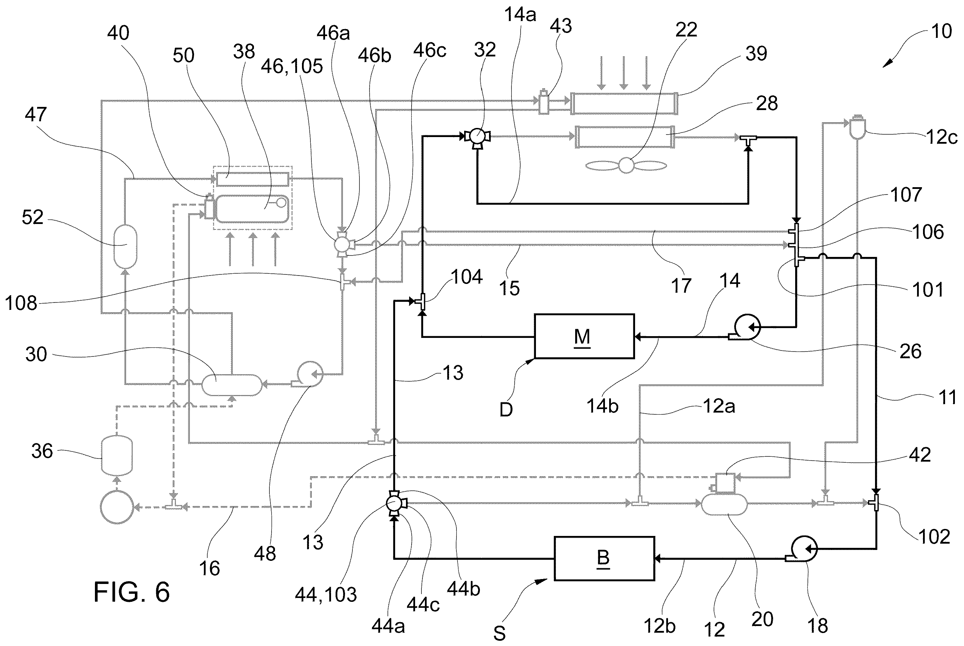

A fifth mode of operation, called "battery pack passive heating mode", or battery pack passive heating mode making use of the thermal control system 10, is shown in figure 6. In this mode of operation, the first circulation pump 18 and the second circulation pump 28 are turned on, with the by-pass valve 32 configured in its second mode, so as to avoid or by-pass the passage of the heat transfer fluid circulating within the powertrain thermal control loop 14 in the radiator 28. At the same time, the compressor 36, and the third circulation pump 48 are kept turned off. At the same time, the first valve assembly 44 is configured in its second mode, so as to put the battery thermal control loop 12 in fluid communication with the powertrain thermal control loop 14 by means of the first connecting branch 11 and the second connecting branch 13. As is clear from the figure, in this mode of operation, there is substantially a flow of heat transfer fluid that withdraws heat from the thermal coupling with the electric motor M and that releases this heat to the battery pack B. This mode of operation is particularly useful - when the temperature of the external environment is low or very low - to increase the temperature of the battery pack B, or to heat the battery pack B, and the electric motor M is hot and is able to provide sufficient heat.

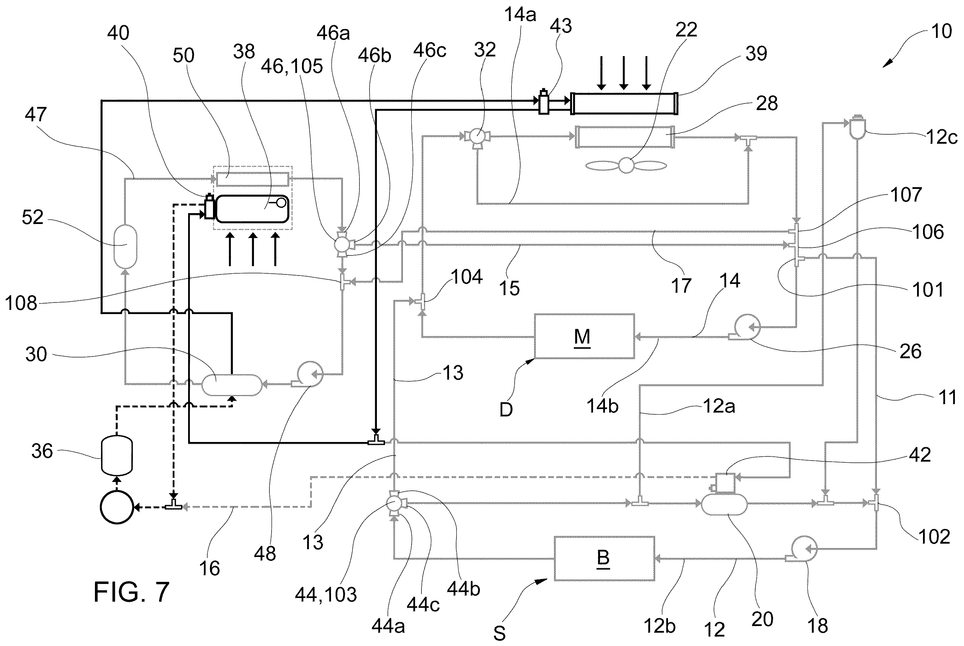

A sixth mode of operation of the thermal control system of figure 1, said "passenger cabin cooling mode", or cabin cooling mode making use of the thermal control system 10, is shown in figure 7. In this mode, the compressor 36 is turned on but at the same time the first circulation pump 18, the second circulation pump 26 and the third circulation pump 48 are kept turned off. As is clear from the figure, in this mode of operation, there is substantially no flow of heat transfer fluid within the battery thermal control loop 12, the powertrain thermal control loop 14 nor the cabin thermal control loop 47, while the refrigerant loop 16 is partially active and a flow of refrigerant fluid is defined that runs a cycle from the compressor 36 to the air-refrigerant heat exchanger 39, then up to the evaporator 38 and then it returns to the compressor 36. This mode of operation allows, through the evaporator 38, to withdraw heat from the cabin, and to release this heat into the external environment through the air-cooling heat exchanger 39, and therefore allows to cool the passenger cabin.

This mode of operation is particularly useful when the air temperature in the passenger cabin is high and it is sufficient to use the air-cooling heat exchanger 39 to lower it.

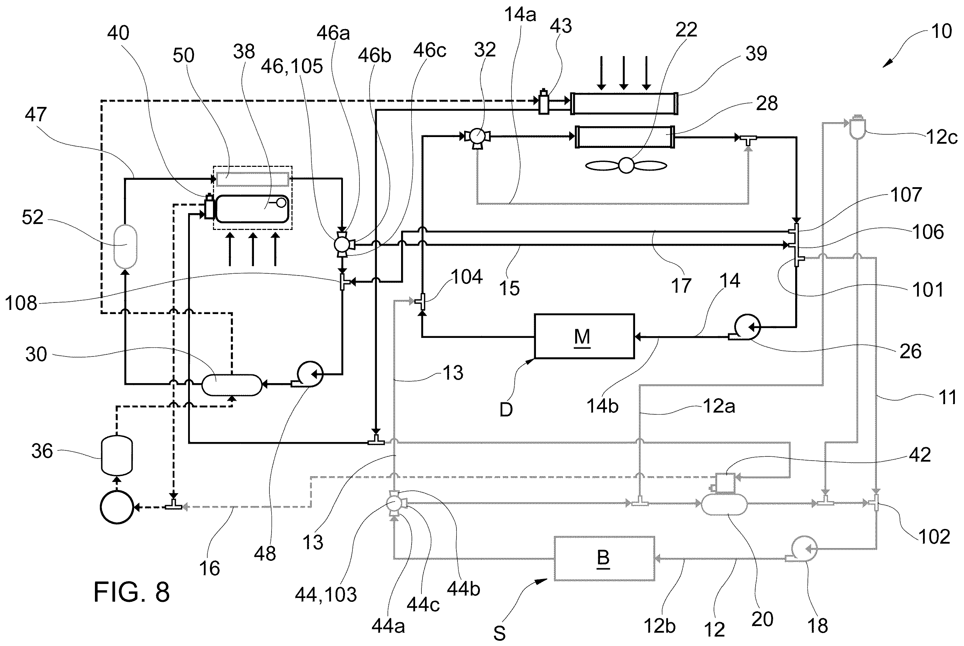

A seventh mode of operation of the thermal control system of figure 1, said "enhanced passenger cabin cooling mode", or enhanced passenger cabin cooling mode making use of the thermal control system 10, is shown in figure 8. In this mode, the compressor 36 is turned on, and together with it, also the second circulation pump 26 and the third circulation pump 48 are turned on. At the same time, the first circulation pump 18 is kept turned off, as is the electric heating device 52. In this mode of operation, the by-pass valve 32 is configured in its first mode; at the same time, the second valve assembly 46 is configured in its second mode. As is clear from the figure, in this mode of operation, there is substantially a flow of heat transfer fluid circulating within the powertrain thermal control loop 14 and the cabin thermal control loop 47, while the refrigerant loop 16 is partially active and a flow of refrigerant fluid is defined that runs a cycle from the compressor 36, to the second fluid-refrigerant heat exchanger 30, then to the air-refrigerant heat exchanger 39, then up to the evaporator 38 and then it returns to the compressor 36. This mode of operation allows, through the evaporator 38, to withdraw heat from the passenger cabin, and to release this heat into the external environment through the air-cooling heat exchanger 39, and therefore allows to cool the passenger cabin. At the same time, through the second fluid-refrigerant heat exchanger 30, further heat is withdrawn from the refrigerant and transferred to the heat transfer fluid, which disperses this heat into the external environment by passing through the radiator 28. This mode of operation is particularly useful when the air temperature in the passenger cabin is very high and it is necessary to use the radiator 28 in conjunction with the air-cooling heat exchanger 39 to lower it.

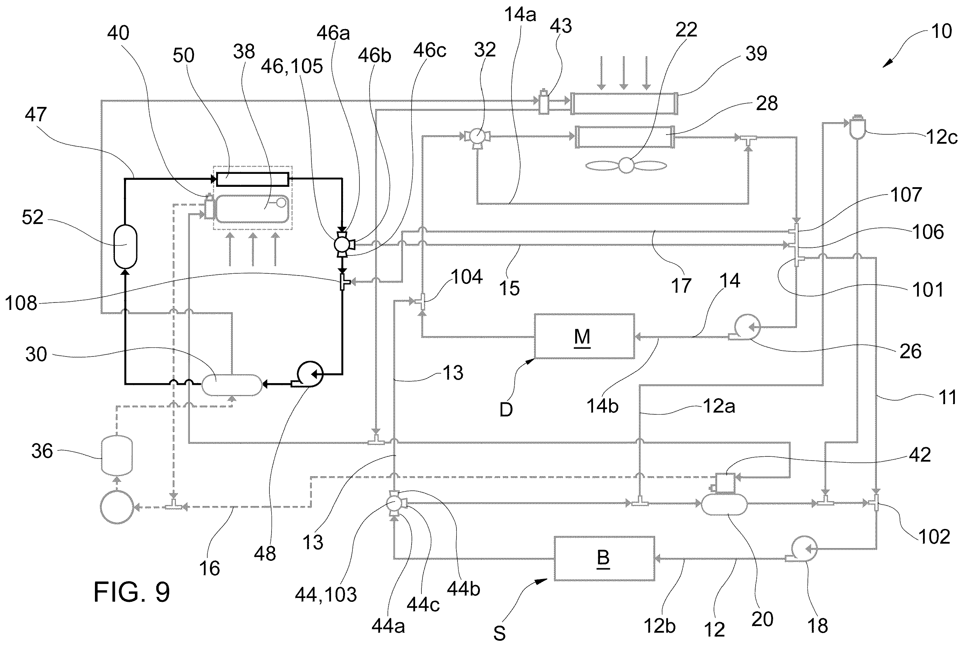

An eighth mode of operation, called "passenger cabin heating mode", or passenger cabin heating mode making use of the thermal control system 10, is shown in figure 9. In this mode of operation, only the third circulation pump 48 is turned on; at the same time, the compressor 36, the first circulation pump 18, and the second circulation pump 26 are kept turned off. At the same time, the second valve assembly 46 is configured in its first mode so as to avoid the inflow of heat transfer fluid into the third connecting branch 15. Finally, in this mode, the electric heating device 52 is turned on. As is clear from the figure, in this mode of operation, there is substantially a flow of heat transfer fluid circulating only within the cabin thermal control loop 47, being heated by the electric heating device 52 and releasing its heat to the air of the cabin by means of the air-liquid heat exchanger 50. This mode of operation is particularly useful when the air temperature in the passenger cabin is low, but neither the battery pack B nor the electric motor M can be used to raise it, whereby the electric heating device 52 is turned on.

A ninth mode of operation, called "passenger cabin, or passive heating mode", or passenger cabin passive heating mode making use of the thermal control system 10, is shown in figure 10. In this mode of operation, the second circulation pump 26 and the third circulation pump 48 are turned on; at the same time, the compressor 36 and the first circulation pump 18 are kept turned off. At the same time, the second valve assembly 46 is configured in its third mode so as to send only a part of the flow rate of heat transfer fluid in the third connecting branch 15, and the remaining part directly to the third circulation pump 48. Finally, in this mode, the electric heating device 52 is left turned off. The by-pass valve is configured in its second mode. As is clear from the figure, in this mode of operation, there is substantially a flow of heat transfer fluid circulating within the cabin thermal control loop 47 and the powertrain thermal control loop 14, being heated by the thermal coupling with the electric motor M - that is, by taking heat from the electric motor M - and releasing its heat to the air of the cabin through the air-liquid heat exchanger 50. This mode of operation is particularly useful when the air temperature in the passenger cabin is low, but it is possible for the electric motor M to raise it, so the electric heating device 52 is left turned off to reduce consumption.

A tenth mode of operation, called "passenger cabin heating mode by means of heat pump and electric motor", or passenger cabin heating mode by means of heat pump and electric motor making use of the thermal control system 10, is shown in figure 11. In this mode of operation, the second circulation pump 26 and the third circulation pump 48, and also the compressor 36 are turned on; at the same time, the first circulation pump 18 is kept turned off. At the same time, the second valve assembly 46 is configured in its second mode so as to direct the inflow of heat transfer fluid supplied to the second valve assembly 46 entirely in the third connecting branch 15. Finally, in this mode, the electric heating device 52 is left turned off. The by-pass valve 32 is configured in its second mode. As is clear from the figure, in this mode of operation, there is substantially a flow of heat transfer fluid circulating within the cabin thermal control loop 47 and the powertrain thermal control loop 14, being heated by the thermal coupling with the electric motor M - that is, taking heat from the electric motor M - and releasing its heat to the air of the passenger cabin through the air-liquid heat exchanger 50, while the refrigerant loop 16 is partially active and a flow of refrigerant fluid is defined that runs through a cycle from the compressor 36, to the second fluid-refrigerant heat exchanger 30, then to the air-refrigerant heat exchanger 39, and then it returns to the compressor 36 by passing the coupling with the first fluid-refrigerant heat exchanger 20. The cycle of the refrigerant loop 16 therefore allows to assist the heating of the cabin, since the refrigerant withdraws heat from the external environment through the air-refrigerant heat exchanger 39 (which therefore functions as an evaporator) and releases it to the heat transfer fluid through the second fluid-refrigerant heat exchanger 30 (which therefore functions as a condenser). This mode of operation is particularly useful when the air temperature in the passenger cabin is low, it is possible to use the electric motor M to raise it, and assist heating by exchange with the environment, whereby the electric heating device 52 is left turned off to reduce consumption.

An eleventh mode of operation, called "passenger cabin heating mode by means of an ambient heat pump", or passenger cabin heating mode by means of an ambient heat pump making use of the thermal control system 10, is shown in figure 12. In this mode of operation, the third circulation pump 48 and the compressor 36 are turned on; at the same time, the first circulation pump 18 and the second circulation pump 26 are kept turned off. At the same time, the second valve assembly 46 is configured in its first mode so as to direct the inflow of heat transfer fluid supplied to the second valve assembly 46 entirely to the third circulation pump 48 without sending any flow rate of heat transfer fluid to the third connecting branch 15. Finally, in this mode, the electric heating device 52 is left turned off. As is clear from the figure, in this mode of operation, there is substantially a flow of heat transfer fluid circulating only within the cabin thermal control loop 47, being heated by the thermal coupling with the refrigerant through the second fluid-refrigerant heat exchanger 30, which withdraws heat from the environment through the air-refrigerant heat exchanger 39, since the refrigerant loop 16 is partially active and a flow of refrigerant fluid is defined that runs through a cycle from the compressor 36, to the second fluid-refrigerant heat exchanger 30, then to the air-refrigerant heat exchanger 39, and then it returns to the compressor 36 by-passing the coupling with the first fluid-refrigerant heat exchanger 20. The cycle of the refrigerant loop 16 therefore allows the passenger cabin to be heated functioning as a heat pump, since the refrigerant withdraws heat from the external environment through the air-refrigerant heat exchanger 39 (which therefore functions as an evaporator) and releases it to the heat transfer fluid through the second fluid-refrigerant heat exchanger 30 (which therefore functions as a condenser). This mode of operation is particularly useful when the air temperature in the passenger cabin is low, and the temperature of the electric motor M and of the battery pack B are also low, and heating can be realized by exchange with the environment, whereby the electric heating device 52 is left turned off to reduce consumption.

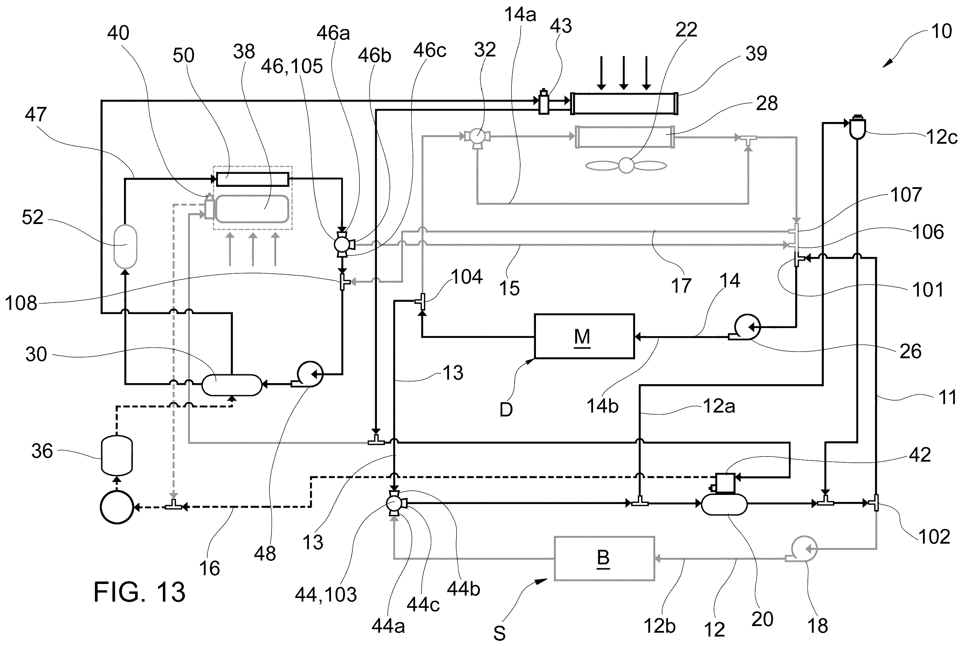

A twelfth mode of operation, called "passenger cabin heating mode by means of the powertrain heat pump", or passenger cabin heating mode by means of the powertrain heat pump making use of the thermal control system 10, is shown in figure 13. In this mode, substantially, the refrigerant loop 16 is used as an intermediate passage for transferring the heat withdrawn by means of the heat transfer fluid from the electric motor M to the heat transfer fluid circulating in the cabin thermal control loop 47, without there being an exchange of flow rates of heat transfer fluid between the cabin thermal control loop 47 and the powertrain thermal control loop 14. In this mode of operation, the second circulation pump 26 and the third circulation pump 48, and also the compressor 36 are turned on; at the same time, the first circulation pump 18 is kept turned off. At the same time, the second valve assembly 46 is configured in its first mode so as to direct the inflow of heat transfer fluid supplied to the second valve assembly 46 entirely to the third circulation pump 48 without sending any flow rate of heat transfer fluid to the third connecting branch 15. Further, the first valve assembly 44 is configured in its second mode. In this case, unlike what is shown, for example, in figure 3, the flow of heat transfer fluid is supplied to the first valve assembly 44 by means of the first outlet 44b and from the first valve assembly 44 the heat transfer fluid is directed entirely to the second outlet 44c, while the inlet 44a remains closed. From what has just been described, it is clear that the terms "outlet" and "inlet" with reference to the first valve assembly 44 and to the second valve assembly 46 are not limiting and descriptive of the flow direction of the heat transfer fluid at the respective valve assembly, but simply denote conduits inflow and outflow to/from the valve assembly, which may function as an inlet or outlet of the heat transfer fluid depending on the flowing direction of the heat transfer fluid flow on the branches that are connected with respect to the valve assembly. Finally, in this mode, the electric heating device 52 is left turned off. As is clear from the figure, in this mode of operation, there is substantially a flow of heat transfer fluid circulating only within the cabin thermal control loop 47, and another flow of heat transfer fluid circulating only on part of the battery thermal control loop 12 and part of the powertrain thermal control loop 14, by means of the connection guaranteed by the first connecting branch 11 and the second connecting branch 13. Essentially, the heat transfer fluid withdraws heat from the electric motor M and releases it to the refrigerant by means of the first fluid-refrigerant heat exchanger 20. In turn, the refrigerant releases this heat to the heat transfer fluid circulating in the cabin thermal control loop 47 by means of the passage in the second fluid-refrigerant heat exchanger 30, since the refrigerant loop 16 is partially active and a flow of refrigerant fluid is defined that runs a cycle from the compressor 36, to the second fluid-refrigerant heat exchanger 30, then to the air-refrigerant heat exchanger 39, then to the first fluid-refrigerant heat exchanger 20 and then it returns to the compressor 36. This mode of operation is particularly useful when the air temperature in the passenger cabin is low, and the temperature of the battery pack B and the external environment are also low, and heating can be realized by means of the heat withdrawn from the electric motor M, whereby the electric heating device 52 is left turned off to reduce consumption.

Clearly, as is evident to the person skilled in the art, the control methods for controlling a thermal control system 10 according to the invention are multiple and, although not all have been explicitly described, these are easily deduced by the person skilled in the art from the description of the thermal control system 10 and from the thermal control methods exemplarily described in a non-limiting manner.

As mentioned, also the application of the thermal control system 10 according to the invention to a vehicle comprising a powertrain D with at least one electric motor M and a supply system S with a battery pack B adapted to power said powertrain D forms part of the invention. In such a case, it is not strictly necessary for the purposes of the invention that the vehicle be exclusively electrically powered, but the advantages of the invention are more effectively obtained in the case where the thermal control system 10 is applied to a purely electrically powered vehicle.

As is evident to the person skilled in the art, the invention has several advantages over the prior art.

In particular, by virtue of the described configuration of features, it is possible to establish different modes of connection between the battery thermal control loop and the powertrain thermal control loop, and between the powertrain thermal control loop and the cabin thermal control loop, as well as different modes of use of the refrigerant loop (as a cooling, heating fluid, or in general as a heat carrier fluid) and, consequently, of the overall operation of the thermal control system.

Finally, by virtue of the coordinated control of the mode of operations of the first valve assembly and of the second valve assembly with respect to the turning on or off of the compressor, first circulation pump, second circulation pump and third circulation pump, it is possible to obtain a very wide variety of mode of operations without the architecture of the thermal control system entailing excessive construction complexity.

In particular, unlike the prior art, by virtue of the use of proportional mechanical valves, the multi-mode thermal control not only functions in the modes described above in an exemplary and non-limiting manner, but also in a series of intermediate modes, which can be managed through thermal sensors arranged in the loop and on the individual components in order to guarantee maximum energy efficiency and the correct operation of the systems in relation to their functional specifications.

Of course, without prejudice to the principle of the invention, the embodiments and details of construction can vary widely with respect to what has been described and illustrated purely by way of non-limiting example, without departing from the scope of the invention as defined by the appended claims.

### LIST OF REFERENCE NUMBERS

- B: battery pack
- D: powertrain
- M: electric motor
- S: supply system

- 10: thermal control system
- 11: first connecting branch
- 12: battery thermal control loop
- 12a: tapping branch
- 12b: coupling branch
- 12c: expansion vessel
- 13: second branch connection
- 14: powertrain thermal control loop
- 14a: by-pass branch
- 14b: coupling branch
- 15: third connecting branch
- 16: refrigerant loop
- 17: fourth connecting branch
- 18: first circulation pump
- 20: first fluid-refrigerant heat exchanger
- 22: fan
- 26: second circulation pump
- 28: radiator
- 30: second first fluid-refrigerant heat exchanger
- 32: by-pass valve
- 36: compressor
- 38: evaporator
- 39: air-refrigerant heat exchanger
- 40: first thermal expansion valve
- 42: second thermal expansion valve
- 43: third thermal expansion valve
- 44: first valve assembly
- 44a: inlet of the first valve assembly
- 44b: first outlet of the first valve assembly
- 44c: second outlet of the first valve assembly
- 46: second valve assembly
- 46a: inlet of the second valve assembly
- 46b: first outlet of the second valve assembly
- 46c: second outlet of the second valve assembly
- 47: cabin thermal control loop
- 48: third circulation pump
- 50: air-liquid heat exchanger
- 52: electric heating device
- 101: first point
- 102: second point
- 103: third point
- 104: fourth point
- 105: fifth point
- 106: sixth point
- 107: seventh point
- 108: eighth point

## Claims

1. Multi-mode thermal control system (10) for a vehicle having a powertrain (D) with an electric motor (M) and a supply system (S) with a battery pack (B) adapted to provide electric power to said electric motor (M), the thermal control system (10) comprising:
a battery thermal control loop (12), comprising a first circulation pump (18) and a first fluid-refrigerant heat exchanger (20), wherein said first circulation pump (18) is adapted to circulate heat transfer fluid within said battery thermal control loop (12), and wherein said battery thermal control loop (12) is thermally coupled to said battery pack (B) of the vehicle;
a powertrain thermal control loop (14) comprising a second circulation pump (26), wherein said second circulation pump (26) is adapted to circulate heat transfer fluid within said powertrain thermal control loop (14), wherein said powertrain thermal control loop (14) is thermally coupled to said electric motor (M) of the vehicle;
a cabin thermal control loop (47), which comprises a third circulation pump (48), an electric heating device (52) adapted to provide heat to the heat transfer fluid circulating within the cabin thermal control loop (47) when turned on, and an air-liquid heat exchanger (50) that is thermally coupled to the air of a passenger cabin of the vehicle, wherein said third circulation pump (48) is adapted to circulate heat transfer fluid within said cabin thermal control loop (47) and through said air-liquid heat exchanger (50);
a refrigerant loop (16) wherein a refrigerant is circulated, and comprising a compressor (36) adapted to circulate said refrigerant within said refrigerant loop (16), a second fluid-refrigerant heat exchanger (30), a evaporator (38), a refrigerant-liquid heat exchanger (39) adapted to thermally couple the refrigerant that flows through it and an outer airflow that that flows on it, a first thermal expansion valve (40) adapted to couple said evaporator (38) to said refrigerant loop (16), a second thermal expansion valve (42) adapted to couple said first fluid-refrigerant heat exchanger (20) to said refrigerant loop (16), and a third thermal expansion valve (43) adapted to couple said refrigerant-liquid heat exchanger (39) to said refrigerant loop (16);
the powertrain thermal control loop (14) further comprising a radiator (28), which is arranged downstream said outer airflow that flows on the refrigerant-liquid heat exchanger (39); wherein the powertrain thermal control loop (14) further comprises a by-pass valve (32) configurable in a first mode and in a second mode, wherein when the by-pass valve (32) is configured in its first mode, the by-pass valve (32) allows the passage of the heat transfer fluid circulating within said powertrain thermal control loop (14) in said radiator (28), and wherein when the by-pass valve (32) is configured in its second mode, the by-pass valve (32) allows the heat transfer fluid circulating within said powertrain thermal control loop (14) to by-pass said radiator (28) by means of a by-pass branch (14a) of the powertrain thermal control loop (14);
a first connecting branch (11) adapted to allow the passage of a flow rate of heat transfer fluid between a first point (101) of the powertrain thermal control loop (14) that is arranged between the radiator (28) and the second circulation pump (26) and a second point (102) of the battery thermal control loop (12) that is arranged between the first fluid-refrigerant heat exchanger (20) and the first circulation pump (18);
a second connecting branch (13), adapted to allow the passage of a flow rate of heat transfer fluid between a third point (103) of the battery thermal control loop (12) that is arranged between the first fluid-refrigerant heat exchanger (20) and the thermal coupling of the battery thermal control loop (12) and the battery pack (B) and a fourth point (104) of the powertrain thermal control loop (14) that is arranged between the by-pass valve (32) and the thermal coupling of the power-train thermal control loop (14) and the electric motor (M) of the vehicle;
a third connecting branch (15) adapted to allow the passage of a flow rate of heat transfer fluid between a fifth point (105) of the cabin thermal control loop (47) arranged between the air-liquid heat exchanger (50) and the third circulation pump (48) and a sixth point (106) of the powertrain thermal control loop (14) that is arranged between the radiator (28) and the first point (101); and
a fourth connecting branch (17), adapted to allow the passage of a flow rate of heat transfer fluid between a seventh point (107) of the powertrain thermal control loop (14) arranged between the sixth point (106) and the radiator (28) and an eighth point (108) of the cabin thermal control loop (47) that is arranged between the fifth point (105) and the third circulation pump (48);
a first valve assembly (44) adapted to control the fluid connection between the battery thermal control loop (12) and the powertrain thermal control loop (14) by adjusting the passage of heat transfer fluid within second connecting branch (13), and being configurable, to this end, in a first mode and in a second mode,
wherein, when the first valve assembly (44) is configured in its first mode, the battery thermal control loop (12) and the powertrain thermal control loop (14) are not in fluid connection with each other, or the heat transfer fluid circulating within the battery thermal control loop (12) does not circulate also within the powertrain thermal control loop (14), and the heat transfer fluid does not flow through the first connecting branch (11) nor through the second connecting branch (13), and,
when the first valve assembly (44) is configured in its second mode, the battery thermal control loop (12) and the powertrain thermal control loop (14) are coupled to each other whereby a flow rate of heat transfer fluid flows from the battery thermal control loop (12) to the powertrain thermal control loop (14) and a flow rate of heat transfer fluid flows from the powertrain thermal control loop (14) to the battery thermal control loop (12); and
a second valve assembly (46) adapted to control the fluid connection between the cabin thermal control loop (47) and the powertrain thermal control loop (14) by adjusting the passage of heat transfer fluid within third connecting branch (15), and being configurable, to this end, in a first mode and in a second mode,
wherein, when the second valve assembly (46) is configured in its first mode, the cabin thermal control loop (47) and the powertrain thermal control loop (14) are not in fluid connection to each other, or the heat transfer fluid circulating within of the cabin thermal control loop (47) does not circulate also within of the powertrain thermal control loop (14), and the heat transfer fluid does not flow through the third connecting branch (15) nor through the fourth connecting branch (17), and,
when the second valve assembly (46) is configured in its second mode, the cabin thermal control loop (47) and the powertrain thermal control loop (14) are coupled to each other whereby a flow rate of heat transfer fluid flows from the cabin thermal control loop (47) to the powertrain thermal control loop (14) through the third connecting branch (15) and a flow rate of heat transfer fluid flows from the powertrain thermal control loop (14) to the cabin thermal control loop (47) through the fourth connecting branch (17).

2. Thermal control system according to claim 1, wherein the first valve assembly (44) consists in a three-way valve, having an inlet (44a), a first outlet (44b) that is in direct fluid connection with the second connecting branch (13), and a second outlet (44c), said three-way valve being configured in such a way that when the first valve assembly (44) is configured in its first mode the first outlet (44b) is closed and the flow rate of heat transfer fluid supplied to the inlet (44a) exits entirely from the second outlet (44c) and that when the first valve assembly (44) is configured in its second mode the second outlet (44c) is closed and the flow rate of heat transfer fluid supplied to the inlet (44a) exits entirely from the first outlet (44b).

3. Thermal control system according to claim 2, wherein the battery thermal control loop (12) is configured in such a way that, when the first valve assembly (44) is configured in its first mode, the flow rate of heat transfer fluid supplied to the inlet (44a) of the first valve assembly (44) flows entirely towards the first fluid-refrigerant heat exchanger (20), and when the first valve assembly (44) is configured in its second mode, there is no flow of heat transfer fluid supplied to the first fluid-refrigerant heat exchanger (20).

4. Thermal control system according to any of the preceding claims, wherein the second valve assembly (46) consists in a three-way valve, having a inlet (46a), a first outlet (46b) that is in direct fluid connection with the third connecting branch (15), and a second outlet (46c), such a three-way valve being configured in such a way that when the second valve assembly (46) is configured in its first mode the first outlet (46b) is closed and the flow rate of heat transfer fluid supplied to the inlet (46a) exits entirely from the second outlet (46c) and that when the second valve assembly (46) is configured in its second mode the second outlet (46c) is closed and the flow rate of heat transfer fluid supplied to the inlet (46a) exits entirely from the first outlet (46b).

5. Thermal control system according to claim 4, wherein the second valve assembly (46) is further configurable in a third mode, wherein when the second valve assembly (46) is configured in its third mode the first outlet (46b) is partially open and the second outlet (46c) is partially open, whereby the flow rate of heat transfer fluid supplied to the inlet (46a) exits in part from the first outlet (46b) and in part from the second outlet (46c).

6. Vehicle comprising a powertrain (D) with at least one electric motor (M) and a supply system (S) with a battery pack (B) adapted to power said powertrain (D), further comprising a thermal control system (10) according to any of the preceding claims.

7. Control method for controlling a thermal control system (10) comprising the steps of:
a) providing a thermal control system (10) according to any claim from 1 to 5;
b1) turning the second circulation pump (26) on and at the same time keeping the compressor (36), the first circulation pump (18) and the third circulation pump (48) turned off; and
c1) configuring the by-pass valve (32) in its first mode.

8. Control method for controlling a thermal control system (10) comprising the steps of:
a) providing a thermal control system (10) according to any claim from 1 to 5;
b2) turning the first circulation pump (18) and the compressor (36) on and at the same time keeping the second circulation pump (28) and the third circulation pump (48) turned off; and
d1) configuring the first valve assembly (44) in its first mode.

9. Control method for controlling a thermal control system (10) comprising the steps of:
a) providing a thermal control system (10) according to any claim from 1 to 5;
b3) turning the first circulation pump (18) on and at the same time keeping the compressor (36), the second circulation pump (28) and the third circulation pump (48) turned off;
c1) configuring the by-pass valve (32) in its first mode; and
d2) configuring the first valve assembly (44) in its second mode.

10. Control method for controlling a thermal control system (10) comprising the steps of:
a) providing a thermal control system (10) according to any claim from 1 to 5;
b4) turning the first circulation pump (18) and the third circulation pump (48) on and at the same time keeping the compressor (36) and the second circulation pump (28) turned off;
c2) configuring the by-pass valve (32) in its second mode;
d2) configuring the first valve assembly (44) in its second mode;
f2) configuring the second valve assembly (46) in its second mode; and
g1) turning the electric heating device (52) on.

11. Control method for controlling a thermal control system (10) comprising the steps of:
a) providing a thermal control system (10) according to any claim from 1 to 5;
b5) turning the first circulation pump (18) and the second circulation pump (28) on, and, at the same time, keeping the compressor (36) and the third circulation pump (48) turned off;
c2) configuring the by-pass valve (32) in its second mode; and
d2) configuring the first valve assembly (44) in its second mode.

12. Control method for controlling a thermal control system (10) comprising the steps of:
a) providing a thermal control system (10) according to any claim from 1 to 5; and
b6) turning the compressor (36) on, and, at the same time, keeping the first circulation pump (18), the second circulation pump (28) and the third circulation pump (48) turned off.

13. Control method for controlling a thermal control system (10) comprising the steps of:
a) providing a thermal control system (10) according to any claim from 1 to 5; and
b7) turning the compressor (36), the first circulation pump (18) and the third circulation pump (48) on, and, at the same, time keeping the second circulation pump (28) turned off;
c1) configuring the by-pass valve (32) in its first mode; and
f2) configuring the second valve assembly (46) in its second mode.

14. Control method for controlling a thermal control system (10) comprising the steps of:
a) providing a thermal control system (10) according to any claim from 1 to 5;
b8) turning the third circulation pump (48) on, and, at the same time, keeping the compressor (36), the first circulation pump (18) and the second circulation pump (28) turned off;
f1) configuring the second valve assembly (46) in its first mode; and
g1) turning the electric heating device (52) on.

15. Control method for controlling a thermal control system (10) comprising the steps of:
a') providing a thermal control system (10) according to claim 5;
b4) turning the first circulation pump (18) and the third circulation pump (48) on, and, at the same time, keeping the compressor (36) and the second circulation pump (28) turned off;
c2) configuring the by-pass valve (32) in its second mode; and
d3) configuring the second valve assembly (46) in its third mode.

16. Control method for controlling a thermal control system (10) comprising the steps of:
a) providing a thermal control system (10) according to any claim from 1 to 5;
b7) turning the compressor (36), the second circulation pump (26) and the third circulation pump (48) on, and, at the same time, keeping the first circulation pump (18) turned off;
c2) configuring the by-pass valve (32) in its second mode; and
f2) configuring the second valve assembly (46) in its second mode.

17. Control method for controlling a thermal control system (10) comprising the steps of:
a) providing a thermal control system (10) according to any claim from 1 to 5;
b9) turning the compressor (36) and the third circulation pump (48) on, and, at the same time, keeping the first circulation pump (18) and the second circulation pump (28) turned off;
f1) configuring the second valve assembly (46) in its first mode.

18. Control method for controlling a thermal control system (10) comprising the steps of:
a) providing a thermal control system (10) according to any claim from 1 to 5;
b10) turning the second circulation pump (28), the third circulation pump (48) and the compressor (36) on, and, at the same time, keeping the first circulation pump (18) turned off;
d2) configuring the first valve assembly (44) in its second mode; and
f1) configuring the second valve assembly (46) in its first mode.
